# EUROPEAN PATENT APPLICATION

(11) **EP 4 797 360 A1**
(43) Date of publication of application: **26.08.2026**
(21) Application number: 24923298.4
(22) Date of filing: 05.09.2024
(51) Int. Cl.: H01M 4/64, H01M 4/66, H01M 4/13, H01M 10/05

(54) **NEGATIVE ELECTRODE CURRENT COLLECTOR, BATTERY CELL, BATTERY, AND ELECTRICAL APPARATUS**

(30) Priority: 05.02.2024 CN 202410167441
(71) Applicant: Contemporary Amperex Technology Co., Limited, Ningde, Fujian 352100 (CN)
(72) Inventor: GUAN, Wenhao, Ningde, Fujian 352100 (CN); MA, Li, Ningde, Fujian 352100 (CN); SHAO, Zirui, Ningde, Fujian 352100 (CN); ZHONG, Wei, Ningde, Fujian 352100 (CN); GE, Xiaoming, Ningde, Fujian 352100 (CN)
(74) Representative: Lorenz Seidler Gossel Part. mbB
(86) International application number: PCT/CN2024/117058
(87) International publication number: WO 2025/167089

(57) **Abstract**

A negative electrode current collector, a battery cell, a battery, and an electric apparatus are disclosed. The negative electrode current collector includes a negative electrode substrate and a modification layer located on at least one side of the negative electrode substrate, where the modification layer includes an active reaction layer, and a laminar material layer disposed between the active reaction layer and the negative electrode substrate. The battery has good cycling performance.

## Description

### CROSS-REFERENCE TO RELATED APPLICATIONS

The present application claims priority to Chinese Patent Application No. 202410167441.4, filed on February 5, 2024, and entitled "NEGATIVE ELECTRODE CURRENT COLLECTOR, BATTERY CELL, BATTERY, AND ELECTRIC APPARATUS," which is incorporated herein by reference in its entirety.

### TECHNICAL FIELD

The present application relates to the field of battery technologies, and specifically to a negative electrode current collector, a battery cell, a battery, and an electric apparatus.

### BACKGROUND

Compared to ionic battery cells, metallic battery cells may have higher energy density. However, unlike the negative electrode of an ionic battery cell, the surface of the negative electrode current collector commonly used in a metallic battery cell typically exhibits a localized nucleation mode. Localized nuclei tend to grow into loose and porous moss-like structures or dendritic structures, leading to a sharp increase in the specific surface area of the negative electrode and causing intense side reactions, which severely impair the cycling performance of metallic battery cells. The above description is merely intended to provide background information related to the present application and does not necessarily constitute the prior art.

### SUMMARY

The present application provides a negative electrode current collector, a battery cell, a battery, and an electric apparatus, which enable the battery to have good cycling performance.

In a first aspect, the present application provides a negative electrode current collector including a negative electrode substrate and a modification layer located on at least one side of the negative electrode substrate, where the modification layer includes an active reaction layer, and a laminar material layer disposed between the active reaction layer and the negative electrode substrate.

By disposing the laminar material layer between the active reaction layer and the negative electrode substrate, the laminar material layer can serve as a buffer layer to mitigate volume expansion of the negative electrode caused during the deposition of metals such as lithium or sodium. As a result, good electronic contact between the modification layer and the negative electrode substrate can be maintained during the cycling of the battery cell, thereby improving the cycling performance of the battery cell.

In some embodiments, a thickness of the active reaction layer is 1 to 25 times that of the laminar material layer, optionally 2 to 20 times. This configuration not only increases the number of active sites on the surface of the negative electrode current collector and reduces the nucleation overpotential of the negative electrode current collector, but also mitigates volume expansion of the negative electrode caused during the deposition of metals, addressing the issue of unlimited volume expansion of the negative electrode, thereby further improving the cycling performance of the battery cell.

In some embodiments, the thickness of the active reaction layer is 50 nm to 1000 nm; and/or the thickness of the laminar material layer is 5 nm to 500 nm.

An active reaction layer having a thickness within the above range facilitates a reduction in the nucleation overpotential of the negative electrode current collector and suppresses the formation of loose and porous moss-like structures or dendritic structures, thereby improving the cycling performance of the battery cell.

A laminar material layer having a thickness within the above range can reduce the risk of cracking or pulverization of the active reaction layer, thereby allowing the battery cell to have good cycling performance.

Additionally, the laminar material layer can react with the deposited metal, and as the thickness of the laminar material layer increases, the first-cycle coulombic efficiency of the battery may decrease. Therefore, when the thickness of the laminar material layer is within the above range, the battery cell can also have a high first-cycle coulombic efficiency.

Optionally, the thickness of the active reaction layer is 300 nm to 1000 nm; and/or the thickness of the laminar material layer is 20 nm to 500 nm.

Optionally, the thickness of the active reaction layer is 300 nm to 750 nm; and/or the thickness of the laminar material layer is 25 nm to 250 nm.

This configuration allows the battery cell to have good cycling performance and a high first-cycle coulombic efficiency.

In some embodiments, an areal density of the active reaction layer is greater than or equal to 0.5 g/m²; and/or the areal density of the laminar material layer is greater than or equal to 0.5 g/m².

In some embodiments, the laminar material layer includes a laminar material with an electronic conductivity greater than or equal to 5 S/m. The laminar material with good electronic conductivity facilitates the intercalation of metals such as lithium or sodium between the layers of the laminar material during charging of the battery cell, enabling the laminar material layer to better serve as a buffer layer, more effectively mitigating volume expansion of the negative electrode caused during the deposition of metals such as lithium or sodium, thereby allowing the battery cell to have better cycling performance.

In some embodiments, the laminar material layer includes a laminar material, where the laminar material includes one or more of As, Sb, Bi, black phosphorus, graphite, hard carbon, MXene, MoS₂, MoO₂, TiO₂, RuO₂, or Li₄Ti₅O₁₂. These laminar materials have good laminar structures and good electronic conductivity, facilitating the intercalation of metals such as lithium or sodium, with relatively small volume changes before and after metal intercalation, thereby more effectively mitigating volume expansion of the negative electrode caused during the deposition of metals, and allowing the battery cell to have better cycling performance. Additionally, the intercalation reactions of these laminar materials have high reversibility, allowing the battery cell to have a high first-cycle coulombic efficiency. Furthermore, these laminar materials can also result in lower production costs for the battery cell.

Optionally, the laminar material includes Bi.

In some embodiments, the nucleation overpotential of the active reaction layer is less than or equal to 80 mV. A low nucleation overpotential of the active reaction layer facilitates a reduction in the formation of loose and porous moss-like structures or dendritic structures, thereby allowing the battery cell to have better cycling performance.

In some embodiments, the active reaction layer includes an alkali metal affinity material, where the alkali metal affinity material includes one or more of a graphitized carbon material, a non-metallic material, or a metallic material. The graphitized carbon materials include one or more of graphene oxide or graphdiyne oxide. The non-metallic materials include one or more of B or P. The metallic materials include one or more of elemental materials or alloy materials of Sn, Zn, Mg, Al, Ag, Au, Ga, In, Ge, Pb, As, Sb, or Bi.

The deposited metals such as lithium or sodium can react with the alkali metal affinity material in the active reaction layer, thereby reducing the nucleation overpotential of the negative electrode current collector and increasing the active surface area of the negative electrode current collector. Additionally, the diffusion of lithium, sodium, or other metal atoms in the above alkali metal affinity materials is faster than in the metal itself, thereby reducing localized metal deposition. Moreover, the alloys formed by lithium, sodium, or other metals with the alkali metal affinity materials have a higher electrode potential than the metal itself, thereby increasing the negative electrode potential, which further helps improve the quality of the solid electrolyte interphase film on the negative electrode surface, further enhancing the cycling performance of the battery cell.

Optionally, the alkali metal affinity material includes one or more of elemental materials or alloy materials of Sn, Zn, Mg, or Al.

In some embodiments, the negative electrode substrate has a two-dimensional structure or a three-dimensional porous structure.

In some embodiments, the negative electrode substrate includes a metallic material, where the metallic material includes one or more of copper, nickel, titanium, magnesium, aluminum, copper alloy, nickel alloy, titanium alloy, magnesium alloy, or aluminum alloy.

In a second aspect, the present application provides a battery cell including the negative electrode current collector according to the first aspect of the present application.

In some embodiments, the battery cell includes at least one of a lithium metal battery cell, a sodium metal battery cell, a negative electrode-free lithium metal battery cell, or a negative electrode-free sodium metal battery cell.

In a third aspect, the present application provides a battery including the battery cell according to the second aspect of the present application.

In a fourth aspect, the present application provides an electric apparatus including the battery according to the third aspect of the present application, where the battery is used to supply electrical energy.

The electric apparatus of the present application includes the battery provided by the present application, thus having at least the same advantages as the battery.

### BRIEF DESCRIPTION OF DRAWINGS

In order to more clearly illustrate the technical solutions of the embodiments of the present application, the drawings required for use in the embodiments of the present application are briefly introduced below. It is evident that the drawings described below are merely some embodiments of the present application, and those of ordinary skill in the art can obtain other drawings based on these drawings without creative effort.
FIG. 1 is a schematic diagram of a battery cell according to some embodiments of the present application.
FIG. 2 is a schematic diagram of a battery module according to some embodiments of the present application.
FIG. 3 is a schematic diagram of a battery pack according to some embodiments of the present application.
FIG. 4 is an exploded schematic diagram of the battery pack shown in FIG. 3.
FIG. 5 is an exploded schematic diagram of a battery cell according to some embodiments of the present application.
FIG. 6 is a schematic structural diagram of a negative electrode current collector according to some embodiments of the present application.
FIG. 7 is a schematic structural diagram of an electrode assembly of a battery cell according to some embodiments of the present application.
FIG. 8 is a schematic diagram of an electric apparatus according to some embodiments of the present application.

In the drawings, the drawings are not necessarily drawn to actual scale.

Description of reference numerals: 1. battery pack; 2. upper enclosure; 3. lower enclosure; 4. battery module; 5. battery cell; 51. casing; 52. electrode assembly; 53. cover plate; 100. positive electrode plate; 200. negative electrode current collector; 300. separator; 201. negative electrode substrate; 202. active reaction layer; and 203. laminar material layer.

### DESCRIPTION OF EMBODIMENTS

Hereinafter, embodiments specifically disclosing the negative electrode current collector, battery cell, battery, and electric apparatus of the present application will be described in detail with appropriate reference to the drawings. However, unnecessary detailed descriptions may be omitted in some cases. For example, detailed descriptions of well-known matters or repeated descriptions of substantially identical structures may be omitted. This is to avoid unnecessarily lengthy descriptions and to facilitate understanding by those skilled in the art. Additionally, the drawings and the following description are provided to enable those skilled in the art to fully understand the present application and are not intended to limit the subject matter recited in the claims.

The "ranges" disclosed in the present application are defined in the form of lower and upper limits, where a given range is defined by selecting a lower limit and an upper limit, and the selected lower and upper limits define the boundaries of a particular range. Ranges defined in this manner may include or exclude endpoints and can be arbitrarily combined, meaning any lower limit can be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In the present application, unless otherwise stated, the numerical range "a-b" represents a shorthand notation for any combination of real numbers between a and b, where both a and b are real numbers. For example, the numerical range "0-5" means that all real numbers between "0-5" have been listed herein, and "0-5" is merely a shorthand notation for these numerical combinations. Additionally, when a parameter is expressed as an integer ≥2, it is equivalent to disclosing that the parameter is, for example, an integer of 2, 3, 4, 5, 6, 7, 8, 9, 10, 11, 12, and so on.

Unless otherwise specified, all embodiments and optional embodiments of the present application can be combined with each other to form new technical solutions, and such technical solutions should be considered included in the disclosure of the present application.

Unless otherwise specified, all technical features and optional technical features of the present application can be combined with each other to form new technical solutions, and such technical solutions should be considered included in the disclosure of the present application.

Unless otherwise specified, all steps in the present application can be performed sequentially or randomly, preferably sequentially. For example, a method including steps (a) and (b) indicates that the method may include steps (a) and (b) performed sequentially, or steps (b) and (a) performed sequentially. For example, if it is mentioned that the method may further include step (c), it means that step (c) can be added to the method in any order, for example, the method may include steps (a), (b), and (c), or steps (a), (c), and (b), or steps (c), (a), and (b).

In the present application, the terms "multiple" or "various" refer to two or more.

In the description of the embodiments of the present application, unless otherwise specified, a first feature being "on" or "under" a second feature may mean that the first and second features are in direct contact, or that the first and second features are in indirect contact through an intermediate medium. Moreover, a first feature being "above," "over," or "on top of" a second feature may mean that the first feature is directly above or obliquely above the second feature, or merely that the horizontal height of the first feature is greater than that of the second feature. A first feature being "below," "under," or "beneath" a second feature may mean that the first feature is directly below or obliquely below the second feature, or merely that the horizontal height of the first feature is less than that of the second feature.

Unless otherwise specified, the terms used in the present application have the commonly understood meanings in the art.

Unless otherwise specified, the numerical values of the parameters mentioned in the present application can be measured using various test methods commonly used in the art, for example, they can be measured according to the test methods provided in the embodiments of the present application. Unless otherwise specified, the test temperature for each parameter is 25°C.

The battery mentioned in the embodiments of the present application may be a single physical module including one or more battery cells to provide higher voltage and capacity. For example, the battery mentioned in the present application may include a battery cell, a battery module, or a battery pack, or the like.

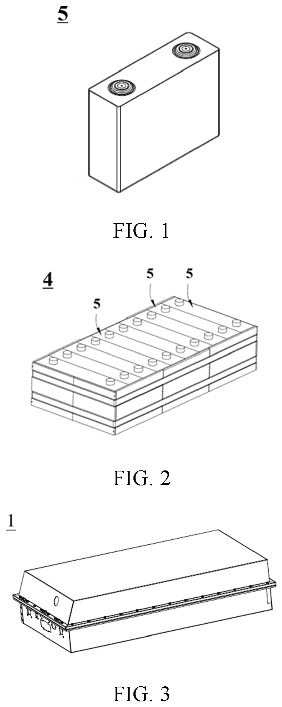

A battery cell is the smallest unit constituting a battery, capable of independently performing charge and discharge functions. The battery cell may be cylindrical, prismatic, or other shapes, which are not limited by the embodiments of the present application. FIG. 1 shows a battery cell 5 with a prismatic structure as an example.

When there are multiple battery cells, the multiple battery cells are connected in series, parallel, or a combination thereof through a busbar component. In some embodiments, the battery may be a battery module; when there are multiple battery cells, the multiple battery cells are arranged and fixed to form a battery module. In some embodiments, the battery may be a battery pack, which includes an enclosure and battery cells, with the battery cells or battery modules accommodated in the enclosure. In some embodiments, the enclosure may form part of the chassis structure of a vehicle. For example, a part of the enclosure may form at least a portion of the chassis of the vehicle, or a part of the enclosure may form at least a portion of the crossbeams and longitudinal beams of the vehicle.

In some embodiments, battery cells may be assembled into a battery module, and the number of battery cells in the battery module may be multiple, with the specific number adjustable based on the application and capacity of the battery module. FIG. 2 is a schematic diagram of a battery module 4 as an example. As shown in FIG. 2, in the battery module 4, multiple battery cells 5 may be arranged sequentially along the length direction of the battery module 4. Alternatively, they may be arranged in any other manner. The multiple battery cells 5 may further be fixed by fasteners.

Optionally, the battery module 4 may further include a housing with an accommodating space, in which the multiple battery cells 5 are accommodated.

In some embodiments, the above battery module may be further assembled into a battery pack, and the number of battery modules in the battery pack may be adjusted based on the application and capacity of the battery pack.

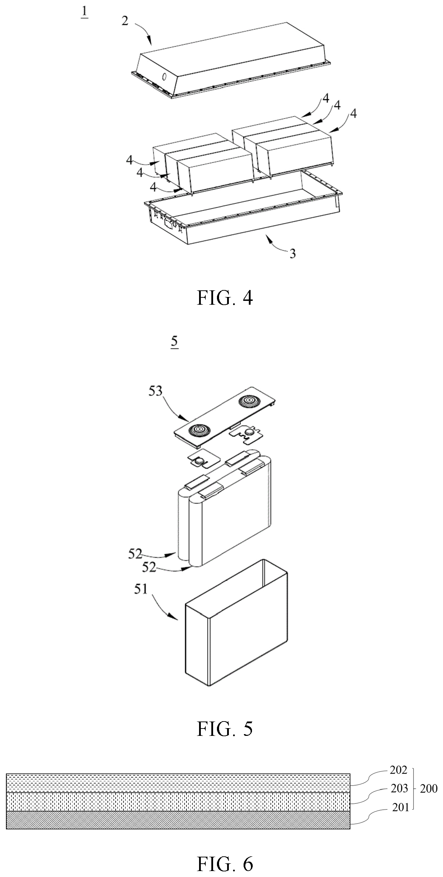

FIG. 3 and FIG. 4 are schematic diagrams of a battery pack 1 as an example. As shown in FIG. 3 and FIG. 4, the battery pack 1 may include an enclosure and multiple battery modules 4 disposed within the enclosure. The enclosure includes an upper enclosure 2 and a lower enclosure 3, where the upper enclosure 2 is used to cover the lower enclosure 3, forming a closed space for accommodating the battery modules 4. The multiple battery modules 4 can be arranged in any manner within the enclosure.

In some embodiments, the battery may be an energy storage device. The energy storage device includes an energy storage container, an energy storage cabinet, and the like.

The battery cells provided in the embodiments of the present application are metallic battery cells or negative electrode-free battery cells, for example, including at least one of a lithium metal battery cell, a sodium metal battery cell, a negative electrode-free lithium metal battery cell, or a negative electrode-free sodium metal battery cell.

A negative electrode-free battery cell generally refers to a battery cell constructed without actively providing a negative electrode active material layer on the negative electrode side during the manufacturing process of the battery cell, for example, without forming a negative electrode active material layer by coating or depositing a layer or a carbonaceous active material layer at the negative electrode during the manufacturing process of the battery cell. During the first charge, ions gain electrons at the negative electrode side and deposit on the surface of the negative electrode current collector to form a metal, and during discharge, the metal can transform back into ions and return to the positive electrode, achieving cyclic charge and discharge. Compared to other battery cells, negative electrode-free battery cells can achieve higher energy density due to the absence of a negative electrode active material layer. In some embodiments, to improve battery cell performance, some substances conventionally used as negative electrode active materials, such as carbon materials, may be provided on the negative electrode side of negative electrode-free battery cells. Although these substances have some capacity, their content is low and they are not used as the primary negative electrode active material in the battery cell, so such battery cells can still be considered negative electrode-free battery cells. The CB (Cell Balance) value of negative electrode-free battery cells is typically very small. For example, in some embodiments, the CB value of a negative electrode-free battery cell may be less than or equal to 0.1. The CB value is the ratio of the capacity per unit area of the negative electrode to the capacity per unit area of the positive electrode in the battery cell. Since negative electrode-free battery cells contain no or only a small amount of negative electrode active material, the capacity per unit area of the negative electrode is small, resulting in a low CB value, typically less than or equal to 0.1.

The battery cell includes an electrode assembly. The electrode assembly may have a wound structure or a stacked structure, which is not limited by the embodiments of the present application.

The battery cell may further include an outer package, which can be used to encapsulate the electrode assembly. The outer package may be a hard shell, such as a hard plastic shell, aluminum shell, or steel shell. The outer package may alternatively be a soft pouch, such as a pouch-type soft package. The material of the soft pouch may be plastic, such as one or more of polypropylene, polybutylene terephthalate (PBT), or polybutylene succinate (PBS).

In some embodiments, as shown in FIG. 5, the outer package may include a casing 51 and a cover plate 53. The casing 51 may include a bottom plate and side plates connected to the bottom plate, with the bottom plate and side plates enclosing a receiving cavity. The casing 51 has an opening communicating with the receiving cavity, and the cover plate 53 is used to cover the opening to seal the receiving cavity. The electrode assembly 52 is encapsulated in the receiving cavity. There may be one or more electrode assemblies 52 in the battery cell 5, and the quantity may be adjusted as required.

Affinity treatment of the negative electrode current collector surface can reduce the formation of loose and porous moss-like structures or dendritic structures. However, common affinity materials exhibit significant volume expansion after reacting with metals such as lithium, and during cycling of metallic battery cells, the negative electrode undergoes repeated expansion and contraction, leading to cracking or pulverization of the affinity material layer, thus affecting the cycling performance of metallic battery cells.

In view of this, embodiments of the present application provide a negative electrode current collector that effectively enhances the cycling performance of the battery cell by adding a laminar material layer between the active reaction layer and the negative electrode substrate.

FIG. 6 is a schematic structural diagram of a negative electrode current collector according to some embodiments of the present application.

As shown in FIG. 6, the negative electrode current collector 200 includes a negative electrode substrate 201 and a modification layer located on at least one side of the negative electrode substrate 201, where the modification layer includes an active reaction layer 202 and a laminar material layer 203 disposed between the active reaction layer 202 and the negative electrode substrate 201.

The active reaction layer is disposed away from the negative electrode substrate and close to the separator of the battery cell. During the deposition of metals such as lithium or sodium, the active reaction layer first comes into contact with and reacts with metals such as lithium or sodium, thereby increasing active sites on the surface of the negative electrode current collector, reducing the nucleation overpotential of the negative electrode current collector, and decreasing the formation of loose and porous moss-like structures or dendritic structures.

The laminar material layer includes a laminar material, into which metals such as lithium or sodium can be intercalated between the layers. Accordingly, the laminar material layer exhibits a relatively small thickness changes before and after charging of the battery cell, that is, before and after the intercalation of metals such as lithium or sodium.

By disposing the laminar material layer between the active reaction layer and the negative electrode substrate, the laminar material layer can serve as a buffer layer to mitigate volume expansion of the negative electrode caused during the deposition of metals such as lithium or sodium. As a result, good electronic contact between the modification layer and the negative electrode substrate can be maintained during the cycling of the battery cell, thereby improving the cycling performance of the battery cell.

In some embodiments, the negative electrode substrate 201 may have a two-dimensional structure or a three-dimensional porous structure.

The negative electrode substrate includes a metallic material, which may include one or more of copper, nickel, titanium, magnesium, aluminum, copper alloy, nickel alloy, titanium alloy, magnesium alloy, or aluminum alloy.

For example, in some embodiments, the negative electrode substrate 201 may be a copper foil.

In some embodiments, the active reaction layer 202 may be formed by an electrodeposition, evaporation, magnetron sputtering, ion beam sputtering, or atomic layer deposition process, and is optionally formed by a magnetron sputtering process.

In some embodiments, the laminar material layer 203 may be formed by electrodeposition, evaporation, magnetron sputtering, ion beam sputtering, or atomic layer deposition processes, optionally by magnetron sputtering.

In some embodiments, the laminar material layer 203 includes a laminar material with an electronic conductivity greater than or equal to 5 S/m. The laminar material with good electronic conductivity facilitates the intercalation of metals such as lithium or sodium between the layers of the laminar material during charging of the battery cell, enabling the laminar material layer to better serve as a buffer layer, more effectively mitigating volume expansion of the negative electrode caused during the deposition of metals such as lithium or sodium, thereby allowing the battery cell to have better cycling performance.

In some embodiments, the laminar material may include one or more of As, Sb, Bi, black phosphorus, graphite, hard carbon, MXene, MoS₂, MoO₂, TiO₂, RuO₂, or Li₄Ti₅O₁₂.

These laminar materials have good laminar structures and good electronic conductivity, facilitating the intercalation of metals such as lithium or sodium, with relatively small volume changes before and after metal intercalation, thereby more effectively mitigating volume expansion of the negative electrode caused during the deposition of metals, and allowing the battery cell to have better cycling performance. Additionally, the intercalation reactions of these laminar materials have high reversibility, allowing the battery cell to have a high first-cycle coulombic efficiency. Furthermore, these laminar materials can also result in lower production costs for the battery cell.

Optionally, the laminar material may include one or more of As, Sb, Bi, black phosphorus, graphite, or hard carbon.

More optionally, the laminar material may include Bi. Bi is inexpensive, non-toxic, and has better interlayer adhesion with the active reaction layer and the negative electrode substrate, thereby facilitating better cycling performance of the battery cell.

In some embodiments, the nucleation overpotential of the active reaction layer 202 may be less than or equal to 80 mV, optionally less than or equal to 50 mV.

The nucleation overpotential of the active reaction layer has a meaning well-known in the art. For example, the nucleation overpotential of the active reaction layer may be obtained by the following method: Under the same process conditions, the active reaction layer is directly disposed on the negative electrode substrate to obtain a negative electrode current collector; in a glove box filled with argon, a metal lithium sheet is used as the counter electrode and assembled with the prepared negative electrode current collector to form a coin cell; at 25°C, the assembled coin cell is left to stand for 12 hours, and then discharged at a constant current density of 1 mA/cm² until a capacity of 1 mAh/cm² is reached. At the start of the lithium metal deposition process, a noticeable voltage drop occurs, followed by a flat voltage plateau. The difference (absolute value) between the voltage at the lowest point of the discharge curve and the flat portion of the voltage plateau is taken as the nucleation overpotential of the active reaction layer. The electrolyte salt of the electrolyte solution is LiFSI with a concentration of 1 mol/L, and the solvent of the electrolyte solution is dimethoxyethane (DME). The separator is a PE film with a thickness of 12 µm.

A low nucleation overpotential of the active reaction layer facilitates a reduction in the formation of loose and porous moss-like structures or dendritic structures, thereby allowing the battery cell to have better cycling performance.

In some embodiments, the active reaction layer 202 includes an alkali metal affinity material. The alkali metal affinity material may be a lithium-affinity material or a sodium-affinity material.

Unlike the laminar material, the reactions between the lithium-affinity material and the deposited lithium metal and between the sodium-affinity material and deposited sodium metal are non-intercalation-type reactions, such as alloying reactions. As a result, the active reaction layer undergoes significant volume expansion before and after charging of the battery cell. During cycling of metallic battery cells, the negative electrode undergoes repeated expansion and contraction, making the active reaction layer prone to cracking or pulverization. By providing a laminar material layer between the active reaction layer and the negative electrode substrate, the laminar material layer can serve as a buffer layer, thereby reducing volume expansion of the negative electrode caused during the deposition of metals such as lithium or sodium, reducing cracking or pulverization of the active reaction layer, maintaining good electronic contact between the modification layer and the negative electrode substrate during cycling of the battery cell, and improving the cycling performance of the battery cell.

The alkali metal affinity material may include one or more of graphitized carbon materials, non-metallic materials, or metallic materials.

Optionally, the graphitized carbon materials may include one or more of graphene oxide or graphdiyne oxide.

Optionally, the non-metallic materials may include one or more of B or P.

Optionally, the metallic materials may include one or more of elemental materials or alloy materials of Sn, Zn, Mg, Al, Ag, Au, Ga, In, Ge, Pb, As, Sb, or Bi.

Optionally, the alkali metal affinity material may include one or more of elemental materials or alloy materials of Sn, Zn, Mg, Al, Ag, or Au.

More optionally, the alkali metal affinity material may include one or more of elemental materials or alloy materials of Sn, Zn, Mg, or Al. These materials are inexpensive and non-toxic, making them more suitable for use in battery cells.

The deposited metals such as lithium or sodium can react with the alkali metal affinity material in the active reaction layer, thereby reducing the nucleation overpotential of the negative electrode current collector and increasing the active surface area of the negative electrode current collector. Additionally, the diffusion of lithium, sodium, or other metal atoms in the above alkali metal affinity materials is faster than in the metal itself, thereby reducing localized metal deposition. Moreover, the alloys formed by lithium, sodium, or other metals with the alkali metal affinity materials have a higher electrode potential than the metal itself, thereby increasing the negative electrode potential, which further helps improve the quality of the solid electrolyte interphase film on the negative electrode surface, further enhancing the cycling performance of the battery cell.

In some embodiments, the thickness of the active reaction layer 202 may be 1 to 25 times that of the laminar material layer 203, for example, 1, 2, 3, 4, 5, 6, 7, 8, 9, 10, 11, 12, 13, 14, 15, 16, 17, 18, 19, 20, 25 times, or a range composed of any of the above values.

When the thickness ratio of the active reaction layer to the laminar material layer is between 1 and 25, this configuration not only increases the number of active sites on the surface of the negative electrode current collector and reduces the nucleation overpotential of the negative electrode current collector, but also mitigates volume expansion of the negative electrode caused during the deposition of metals, addressing the issue of unlimited volume expansion of the negative electrode, thereby further improving the cycling performance of the battery cell.

Optionally, the thickness of the active reaction layer 202 may be 2 to 25 times, 2 to 20 times, 5 to 20 times, 8 to 20 times, 8 to 15 times, or 8 to 12 times that of the laminar material layer 203. This configuration can further improve the cycling performance of the battery cell.

In some embodiments, the thickness of the active reaction layer 202 may be 50 nm to 1000 nm, for example, 50 nm, 100 nm, 150 nm, 200 nm, 250 nm, 300 nm, 350 nm, 400 nm, 450 nm, 500 nm, 550 nm, 600 nm, 650 nm, 700 nm, 750 nm, 800 nm, 900 nm, 1000 nm, or a range composed of any of the above values.

An active reaction layer having a thickness within the above range facilitates a reduction in the nucleation overpotential of the negative electrode current collector and suppresses the formation of loose and porous moss-like structures or dendritic structures, thereby improving the cycling performance of the battery cell.

An active reaction layer having a thickness within the above range also enables the battery cell to have a high energy density.

Optionally, the thickness of the active reaction layer 202 may be 100 nm to 1000 nm, 150 nm to 1000 nm, 200 nm to 1000 nm, 300 nm to 1000 nm, 100 nm to 750 nm, 150 nm to 750 nm, 200 nm to 750 nm, or 300 nm to 750 nm. This configuration can further improve the cycling performance of the battery cell.

In some embodiments, the thickness of the laminar material layer 203 may be 5 nm to 500 nm, for example, 5 nm, 10 nm, 15 nm, 20 nm, 25 nm, 30 nm, 35 nm, 40 nm, 45 nm, 50 nm, 55 nm, 65 nm, 75 nm, 85 nm, 100 nm, 150 nm, 200 nm, 250 nm, 300 nm, 350 nm, 400 nm, 450 nm, 500 nm, or a range composed of any of the above values.

A laminar material layer having a thickness within the above range can reduce the risk of cracking or pulverization of the active reaction layer, thereby allowing the battery cell to have good cycling performance.

Additionally, the laminar material layer can react with the deposited metal, and as the thickness of the laminar material layer increases, the first-cycle coulombic efficiency of the battery may decrease. Therefore, when the thickness of the laminar material layer is within the above range, the battery cell can also have a high first-cycle coulombic efficiency.

Optionally, the thickness of the laminar material layer 203 may be 10 nm to 500 nm, 20 nm to 500 nm, 25 nm to 500 nm, 30 nm to 500 nm, 10 nm to 250 nm, 20 nm to 250 nm, 25 nm to 250 nm, 30 nm to 250 nm, 10 nm to 100 nm, 20 nm to 100 nm, 25 nm to 100 nm, 30 nm to 100 nm, 10 nm to 75 nm, 20 nm to 75 nm, 25 nm to 75 nm, or 30 nm to 75 nm. This configuration enables the battery cell to have good cycling performance and a high first-cycle coulombic efficiency.

In some embodiments, a total thickness of the modification layer may be 55 nm to 1500 nm, for example, 55 nm, 110 nm, 200 nm, 250 nm, 275 nm, 300 nm, 325 nm, 350 nm, 400 nm, 450 nm, 500 nm, 550 nm, 600 nm, 650 nm, 700 nm, 750 nm, 825 nm, 900 nm, 1000 nm, 1100 nm, 1200 nm, 1300 nm, 1400 nm, 1500 nm, or a range composed of any of the above values.

Optionally, the total thickness of the modification layer may be 110 nm to 1500 nm, 250 nm to 1500 nm, 300 nm to 1500 nm, 250 nm to 1100 nm, 300 nm to 1100 nm, 250 nm to 1000 nm, 300 nm to 1000 nm, 250 nm to 825 nm, or 300 nm to 825 nm.

When the total thickness of the modification layer is within the above range, the battery cell can have good cycling performance and a high energy density.

In some embodiments, an areal density of the active reaction layer 202 may be greater than or equal to 0.5 g/m². This configuration enables the battery cell to have good cycling performance.

In some embodiments, the areal density of the laminar material layer 203 may be greater than or equal to 0.5 g/m². This configuration enables the battery cell to have good cycling performance.

Embodiments of the present application further provide a battery cell including the negative electrode current collector provided in the embodiments of the present application. The battery cell may be a metallic battery cell or a negative electrode-free battery cell, for example, including at least one of a lithium metal battery cell, a sodium metal battery cell, a negative electrode-free lithium metal battery cell, or a negative electrode-free sodium metal battery cell.

The battery cell includes an electrode assembly and an electrolyte. The electrode assembly includes a positive electrode plate, a negative electrode plate, and a separator.

In some embodiments, the negative electrode current collector provided in the embodiments of the present application can be used as a negative electrode plate, thereby obtaining a negative electrode-free battery cell, such as a negative electrode-free lithium metal battery cell or a negative electrode-free sodium metal battery cell.

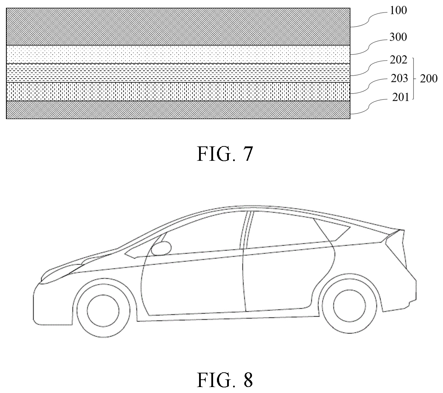

FIG. 7 Is a schematic structural diagram of an electrode assembly of a negative electrode-free battery cell according to some embodiments of the present application. As shown in FIG. 7, the electrode assembly includes a positive electrode plate 100, a negative electrode current collector 200, and a separator 300 disposed between the positive electrode plate 100 and the negative electrode current collector 200.

In some embodiments, the surface of the negative electrode current collector may further have a lithium metal layer or a sodium metal layer. This configuration can result in a lithium metal battery cell or a sodium metal battery cell.

### [Positive Electrode Plate]

In some embodiments, the positive electrode plate includes a positive electrode current collector and a positive electrode film layer disposed on at least one surface of the positive electrode current collector and including a positive electrode active material. For example, the positive electrode current collector has two surfaces opposite in its thickness direction, and the positive electrode film layer is disposed on either or both of the two opposite surfaces of the positive electrode current collector.

In some embodiments, the positive electrode active material includes materials capable of deintercalating and intercalating lithium.

In an example, the positive electrode active material may include, but is not limited to, one or more of lithium transition metal oxides, metal chalcogenides, lithium-containing phosphates, or their respective modified compounds. Examples of lithium transition metal oxides may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, lithium titanium oxide, or their respective modified compounds. Lithium transition metal oxides may include, but are not limited to, laminar structures or spinel structures. Examples of lithium-containing phosphates may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and one or more modified compounds thereof.

In some embodiments, to further enhance the energy density of the battery cell, the positive electrode active material may include one or more of lithium transition metal oxides represented by the general formula LiₐNi_{b}Co_{c}M_{d}OₑD_{f} or their modified compounds, where 0.8 ≤ a ≤ 1.2, 0.5 ≤ b < 1, 0 < c < 1, 0 < d < 1, 1 ≤ e ≤ 2, 0 ≤ f ≤ 1, M may include, but is not limited to, one or more of Ge, Mo, Sn, Mn, Al, Zr, Zn, Cu, Cr, Mg, Fe, V, Ti, or B, and D may include, but is not limited to, one or more of N, F, S, or Cl.

In some embodiments, the positive electrode active material may include both lithium transition metal oxides and lithium-containing phosphates. This configuration facilitates obtaining a battery cell that offers both high capacity and high reliability.

In an example, the positive electrode active material may include, but is not limited to, one or more of LiCoO₂, LiNiO₂, LiMnO₂, LiNi_{1/2}Mn_{1/2}O₂, LiMn₂O₄, Li_{4/3}Ti_{5/3}O₄, LiNi_{1/2}Mn_{1/2}O₂, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.80}Co_{0.15}Al_{0.05}O₂, LiFePO₄, LiMnPO₄, or Li_{1.13}Ti_{0.57}Fe_{0.3}S₂.

In some embodiments, the positive electrode active material includes materials capable of deintercalating and intercalating sodium. For example, the positive electrode active material may include, but is not limited to, one or more of laminar transition metal oxides (including but not limited to P2-type or O3-type), polyanionic materials (such as phosphates, fluorophosphates, pyrophosphates, and sulfates), or Prussian-type materials.

In some embodiments, in an example, the positive electrode active material may include, but is not limited to, one or more of NaFeO₂, NaCoO₂, NaCrO₂, NaMnO₂, NaNiO₂, Na_{0.67}MO₂ (where M includes at least two of Fe, Co, Cr, Mn, Ni, V, Ti, or Mo), NaMO₂ (where M includes at least two of Fe, Co, Ni, V, Ti, or Mo), NaFePO₄, NaMnPO₄, NaCoPO₄, Na₄Fe₃(PO₄)₂O₇, Na₃V₂(PO₄)₂F₃, Na₃V₂(PO₄)₃, Prussian blue, Prussian white, or their respective modified compounds.

The modified compounds of the above positive electrode active materials may involve doping modification and/or surface coating modification of the positive electrode active materials.

The charging and discharging of the battery cell are accompanied by deintercalation and consumption of Li/Na, and the molar concentration of Li/Na varies when the battery cell is discharged to different states. In the embodiments of the present application, in the listing of positive electrode active materials, the molar concentration of Li/Na refers to the initial state of the material. When the positive electrode active material is applied in a battery cell, the molar concentration of Li/Na may change after charge and discharge cycles.

In the examples of positive electrode active materials in the embodiments of the present application, the molar concentration of O is only a theoretical value, lattice oxygen release may cause variations in the molar concentration of O, and the actual molar concentration of O may fluctuate.

In some embodiments, the positive electrode film layer may optionally further include a positive electrode conductive agent. In an example, the positive electrode conductive agent may include, but is not limited to, one or more of superconducting carbon, conductive graphite, acetylene black, carbon black, Ketjen black, carbon dots, carbon nanotubes, graphene, or carbon nanofibers.

In some embodiments, the positive electrode film layer may optionally further include a positive electrode binder. In an example, the positive electrode binder may include, but is not limited to, one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, polyethylene oxide, fluorinated acrylate resin, styrene-butadiene rubber (SBR), water-soluble unsaturated resin SR-1B, water-based acrylic resin (for example, polyacrylic acid PAA, polymethacrylic acid PMAA, sodium polyacrylate PAAS), polyacrylamide (PAM), polyvinyl alcohol (PVA), sodium alginate (SA), or carboxymethyl chitosan (CMCS).

In some embodiments, the positive electrode current collector may be a metal foil or a composite current collector. As an example of a metal foil, aluminum foil may be used. The composite current collector may include a polymer material base layer and a metallic material layer formed on at least one surface of the polymer material base layer. In an example, the metallic material may include, but is not limited to, one or more of aluminum, aluminum alloy, nickel, nickel alloy, titanium, titanium alloy, silver, or silver alloy. In an example, the polymer material base layer may include, but is not limited to, one or more of polypropylene, polyethylene terephthalate (PET), polybutylene terephthalate (PBT), polystyrene (PS), or polyethylene (PE).

The positive electrode film layer is typically formed by coating a positive electrode slurry on the positive electrode current collector, followed by drying and cold pressing. The positive electrode slurry is generally formed by dispersing the positive electrode active material, an optional positive electrode conductive agent, an optional positive electrode binder, and any other components in a solvent and stirring them until the mixture is uniform. The solvent may be N-methylpyrrolidone (NMP), but is not limited thereto.

### [Separator]

The separator is located between the positive electrode plate and the negative electrode plate, primarily to prevent internal short circuits.

The present application does not impose specific restrictions on the type of separator, and any well-known porous structure separator with good chemical and mechanical stability can be used. In some embodiments, the material of the separator may include, but is not limited to, one or more of glass fiber, non-woven fabric, polyethylene, polypropylene, or polyvinylidene fluoride. The separator may be a single-layer film or a multilayer composite film. When the separator is a multilayer composite film, the materials of each layer may be the same or different.

### [Electrolyte]

In some embodiments, the electrolyte is an electrolyte solution, which includes an electrolyte salt and an organic solvent.

In some embodiments, the electrolyte solution includes anions, which may include one or more of bis(fluorosulfonyl)imide anion (FSI⁻), bis(trifluoromethanesulfonyl)imide anion (TFSI⁻), bis(oxalato)borate anion (BOB⁻), difluoro(oxalato)borate anion (DFOB⁻), difluorobis(oxalato)phosphate anion (DFOP⁻), tetrafluoro(oxalato)phosphate anion (TFOP⁻), difluorophosphate anion (PO₂F₂⁻), hexafluorophosphate anion (PF₆⁻), tetrafluoroborate anion (BF₄⁻), hexafluoroarsenate anion (AsF₆⁻), or trifluoromethanesulfonate anion (CF₃SO₃⁻).

In some embodiments, the electrolyte solution includes cations, which may include one or more of lithium ions or sodium ions.

In some embodiments, a concentration of the electrolyte salt may be 0.3 mol/L or higher, optionally 0.7 mol/L or higher. Further, the concentration of the electrolyte salt may be 4 mol/L or lower, optionally 2.5 mol/L or lower, or 1.7 mol/L or lower. The electrolyte salt having a concentration within the above range enables the electrolyte solution to have appropriate ionic conductivity.

The organic solvent may include, but is not limited to, one or more of esters, ethers, sulfones, or nitriles. Esters may include, but are not limited to, one or more of carbonates, phosphates, carboxylates, sulfates, or sulfonates. Carbonates may include cyclic carbonates and/or linear carbonates, optionally including both cyclic carbonates and linear carbonates. Linear carbonates may include low-viscosity polar linear carbonates, aliphatic branched carbonates, and the like.

In an example, the organic solvent may include, but is not limited to, one or more of ethylene carbonate (EC), propylene carbonate (PC), butylene carbonate, ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), diethyl sulfone (ESE), tetraethylene glycol dimethyl ether (TEGDME), dimethoxyethane (DME), 1,3-dioxolane (DOL), trimethyl phosphate, 3-methoxypropionitrile, H(CF₂)₂OCH₃, C₄F₉OCH₃, H(CF₂)₂OCH₂CH₃, H(CF₂)₂OCH₂CF₃, H(CF₂)₂CH₂O(CF₂)₂H, CF₃CHFCF₂OCH₃, CF₃CHFCF₂OCH₂CH₃, 2-trifluoromethyl hexafluoropropyl methyl ether, 2-trifluoromethyl hexafluoropropyl ethyl ether, 2-trifluoromethyl hexafluoropropyl propyl ether, 3-trifluoromethyl octafluorobutyl methyl ether, 3-trifluoromethyl octafluorobutyl ethyl ether, 3-trifluoromethyl octafluorobutyl propyl ether, 4-trifluoromethyl decafluoropentyl methyl ether, 4-trifluoromethyl decafluoropentyl ethyl ether, 4-trifluoromethyl decafluoropentyl propyl ether, 5-trifluoromethyl dodecafluorohexyl methyl ether, 5-trifluoromethyl dodecafluorohexyl ethyl ether, 5-trifluoromethyl dodecafluorohexyl propyl ether, 6-trifluoromethyl tetradecafluoroheptyl methyl ether, 6-trifluoromethyl tetradecafluoroheptyl ethyl ether, 6-trifluoromethyl tetradecafluoroheptyl propyl ether, 7-trifluoromethyl hexadecafluorooctyl methyl ether, 7-trifluoromethyl hexadecafluorooctyl ethyl ether, or 7-trifluoromethyl hexadecafluorooctyl propyl ether.

In some embodiments, the electrolyte solution may optionally further include additives. For example, the additives may include a negative electrode film-forming additives, a positive electrode film-forming additives, or an additive capable of improving certain properties of the battery cell, such as an additive for improving overcharge performance, an additive for improving high-temperature performance, or an additive for improving low-temperature power performance.

The preparation method of the battery cell is well-known. In an example, the positive electrode plate, separator, and negative electrode plate may be made into an electrode assembly through a winding process and/or a lamination process; and the electrode assembly is placed in an outer package, followed by drying, and the above electrolyte solution is injected, followed by processes such as vacuum encapsulation, standing, and formation to obtain a battery cell. Multiple battery cells can be further connected in series, parallel, or a combination thereof to form a battery module. Alternatively, multiple battery modules may further be connected in series, parallel, or a combination thereof to form a battery pack. In some embodiments, multiple battery cells may alternatively be directly assembled into a battery pack.

Embodiments of the present application further provide an electric apparatus including the battery provided in the embodiments of the present application. The battery may be used as a power source for the electric apparatus or as an energy storage unit for the electric apparatus. The electric apparatus may be, but is not limited to, a mobile device (for example, a mobile phone, a tablet computer, or a notebook computer), an electric vehicle (for example, a full electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The type of battery, such as a battery cell, battery module, or battery pack, may be selected depending on usage requirements of the electric apparatus.

FIG. 8 is a schematic diagram of an electric apparatus as an example. The electric apparatus is a pure electric vehicle, a hybrid electric vehicle, a plug-in hybrid electric vehicle, or the like. To meet the high power and high energy density requirements of the electric apparatus, a battery pack or battery module can be used.

In another example, the electric apparatus may be a mobile phone, tablet computer, laptop, or the like. Such electric apparatuses typically required to be light and thin, and a battery cell may be used as a power source.

### Examples

The following examples describe the content disclosed in the present application in more detail, and these examples are provided only for illustrative purposes, as various modifications and changes within the scope of the disclosure of the present application will be apparent to those skilled in the art. Unless otherwise stated, all parts, percentages, and ratios reported in the following examples are based on weight, all reagents used in the examples are commercially available or synthesized by conventional methods and can be used directly without further processing, and all instruments used in the examples are commercially available.

### Example 1

A commercially available double-sided smooth copper foil with a thickness of 8 µm was used. The copper foil was wiped with a 1 mol/L acetic acid solution and left to stand for 20 minutes, then wiped with anhydrous ethanol. The copper foil was then placed in deionized water for ultrasonic cleaning for 5 minutes, followed by vacuum drying at 80°C for 30 minutes.

After a Bi target was installed, the copper foil sample was placed in a magnetron sputtering instrument, and the chamber was evacuated to a vacuum (< 1 Pa). Argon gas was introduced into the chamber to 1 bar, and then evacuated again to a vacuum (< 1 Pa). The magnetron sputtering current was set to 30 mA, and the sputtering time was set to 75 s. The target was then replaced with an Sn target, and the chamber was evacuated to a vacuum (< 1 Pa). Argon gas was introduced into the chamber to 1 bar, and then evacuated again to a vacuum (< 1 Pa). The magnetron sputtering current was set to 30 mA, and the sputtering time was set to 600 s, resulting in a copper foil with a modification layer, that is, the negative electrode current collector. The modification layer includes an active reaction layer of Sn metal and a laminar material layer of Bi metal, with the laminar material layer located between the copper foil and the active reaction layer. The thickness of the active reaction layer is 300 nm, with an areal density of approximately 21.93 g/m². The thickness of the laminar material layer is 30 nm, with an areal density of approximately 24.9 g/m².

### Examples 2 to 6

The preparation method for the copper foil with a modification layer is similar to that of Example 1, except that the thicknesses of the active reaction layer and the laminar material layer differ, with specific parameters detailed in Table 1. The magnetron sputtering current was 30 mA, and the thicknesses of the active reaction layer and the laminar material layer were adjusted by varying the magnetron sputtering time. Changes in the thicknesses of the active reaction layer and the laminar material layer also affect their areal densities.

### Comparative Example 1

A commercially available double-sided smooth copper foil with a thickness of 8 µm was used. The copper foil was wiped with a 1 mol/L acetic acid solution and left to stand for 20 minutes, then wiped with anhydrous ethanol. The copper foil was then placed in deionized water for ultrasonic cleaning for 5 minutes, followed by vacuum drying at 80°C for 30 minutes.

### Comparative Example 2

A commercially available double-sided smooth copper foil with a thickness of 8 µm was used. The copper foil was wiped with a 1 mol/L acetic acid solution and left to stand for 20 minutes, then wiped with anhydrous ethanol. The copper foil was then placed in deionized water for ultrasonic cleaning for 5 minutes, followed by vacuum drying at 80°C for 30 minutes.

After an Sn target was installed, the copper foil sample was placed in a magnetron sputtering instrument, and the chamber was evacuated to a vacuum (< 1 Pa). Argon gas was introduced into the chamber to 1 bar, and then evacuated again to a vacuum (< 1 Pa). The magnetron sputtering current was set to 30 mA, and the sputtering time was set to 100 s, resulting in a copper foil with a modification layer. The modification layer is an active reaction layer of Sn metal.

### Performance test

Lithium iron phosphate, conductive agent carbon black (Super P), and binder polyvinylidene fluoride (PVDF) were mixed uniformly in a weight ratio of 8:1:1 in an appropriate amount of solvent N-methylpyrrolidone (NMP) to obtain a positive electrode slurry. The positive electrode slurry was coated on a positive electrode current collector aluminum foil and dried to obtain a positive electrode plate.

In a glove box filled with argon, the positive electrode plate, the copper foil with a modification layer prepared as above (pure copper foil for Comparative Example 1), and the separator were assembled into a coin cell. The electrolyte salt of the electrolyte solution was LiFSI with a concentration of 1 mol/L, and the solvent of the electrolyte solution was dimethoxyethane (DME). The separator was a PE film with a thickness of 12 µm.

### (1) First-cycle coulombic efficiency test

At 25°C, the assembled coin cell was left to stand for 12 hours, then charged at a constant current of 0.1C to 3.65 V, followed by constant voltage charging at 3.65 V to 0.05C, to obtain a first-cycle charge capacity. The coin cell was left to stand for 10 minutes, then discharged at a constant current of 0.2C to 2 V, to obtain a first-cycle discharge capacity. The first-cycle coulombic efficiency of coin cell was calculated as follows: First-cycle coulombic efficiency = (first-cycle discharge capacity /first-cycle charge capacity) × 100%. During testing, the number of coin cell samples may be 6 or more, and the average value of the test results was taken.

### (2) Negative electrode thickness change test

At 25°C, the assembled coin cell was left to stand for 12 hours, then charged at a constant current of 0.1C to 3.65 V, followed by constant voltage charging at 3.65 V to 0.05C, at which point the coin cell was in a fully charged state.

The fully charged coin cell was disassembled, and the total thickness of the active reaction layer and the laminar material layer after full charge was measured and recorded as h₁. Before charging of the coin cell, the total thickness of the active reaction layer and the laminar material layer was recorded as h₀. The thickness change of the negative electrode was expressed as h₁/h₀. For Comparative Example 2, since no laminar material layer was provided, h₁ represents the thickness of the active reaction layer after full charge, and h₀ represents the thickness of the active reaction layer before charging of the coin cell. During testing, the number of coin cell samples may be 6 or more, and the average value of the test results was taken.

### (3) Cycling performance test

At 25°C, the assembled coin cell was left to stand for 12 hours, then charged at a constant current of 0.2C to 3.65 V, followed by constant voltage charging at 3.65 V to 0.05C. The coin cell was left to stand for 10 minutes, then discharged at a constant current of 0.5C to 2 V. The coin cell was cycled according to the above method until the discharge capacity decayed to 50% of the first-cycle discharge capacity, and the number of cycles was recorded. During testing, the number of coin cell samples may be 6 or more, and the average value of the test results was taken.

**Table 1**

| No. | Active reaction layer | | Laminar material layer | | h₁/h₀ | Number of cycles (cycles) |
|---|---|---|---|---|---|---|
| | Lithium-affinity material | Thickness H₁ (nm) | Laminar material | Thickness H₂ (nm) | | |
| Example 1 | Sn | 300 | Bi | 30 | 233% | 236 |
| Example 2 | Sn | 500 | Bi | 50 | 231% | 258 |
| Example 3 | Sn | 750 | Bi | 75 | 225% | 273 |
| Example 4 | Sn | 1000 | Bi | 100 | 214% | 282 |
| Example 5 | Sn | 50 | Bi | 5 | 249% | 131 |
| Example 6 | Sn | 100 | Bi | 10 | 237% | 162 |
| Comparative Example 1 | - | - | - | - | - | 66 |
| Comparative Example 2 | Sn | 50 | - | - | 311% | 94 |

From the test results in Table 1, it can be seen that providing a laminar material layer between the active reaction layer and the copper foil can mitigate the expansion issue of the negative electrode, reduce the thickness change of the active reaction layer, and improve the cycling performance of the battery.

From the test results in Table 1, it can also be seen that as the thickness of the active reaction layer increases, by increasing the thickness of the laminar material layer and maintaining the thickness ratio of the active reaction layer to the laminar material layer within an appropriate range, the expansion issue of the negative electrode can be mitigated, and the battery can have good cycling performance.

**Table 2**

| No. | First-cycle coulombic efficiency |
|---|---|
| Example 1 | 90% |
| Example 2 | 80% |
| Example 3 | 74% |
| Example 4 | 70% |
| Example 5 | 95% |
| Example 6 | 92% |

From the test results in Table 2, it can be seen that when the thickness ratio of the active reaction layer to the laminar material layer is constant, an increase in the thickness of the active reaction layer reduces the first-cycle coulombic efficiency of the battery.

### Examples 2-1 to 2-4

The preparation method for the copper foil with a modification layer is similar to that of Example 2, except that the thickness of the laminar material layer differs, with specific parameters detailed in Table 3. The magnetron sputtering current was 30 mA, and the thickness of the laminar material layer was adjusted by varying the magnetron sputtering time.

**Table 3**

| No. | Active reaction layer | | Laminar material layer | | H₁/H ₂ | h₁/h₀ | Number of | |
|---|---|---|---|---|---|---|---|---|
| | Lithium-affinity material | Thickness H₁ (nm) | Lamina r materia l | Thickness H₂ (nm) | | | First-cycle coulombic efficiency | cycles (cycles) |
| Example 2-1 | Sn | 500 | Bi | 500 | 1 | 146% | 76% | 278 |
| Example 2-2 | Sn | 500 | Bi | 250 | 2 | 177% | 77% | 272 |
| Example 2 | Sn | 500 | Bi | 50 | 10 | 231% | 80% | 258 |
| Example 2-3 | Sn | 500 | Bi | 25 | 20 | 258% | 86% | 230 |
| Example 2-4 | Sn | 500 | Bi | 20 | 25 | 261% | 89% | 224 |

From the test results in Table 3, it can be seen that when the thickness of the active reaction layer remains constant, increasing the thickness of the laminar material layer can better mitigate the expansion issue of the negative electrode. Since Bi may also react with the deposited lithium metal, as the thickness of the laminar material layer increases, the first-cycle coulombic efficiency of the battery decreases to varying degrees; however, the coulombic efficiency in the later stages of battery cycling increases rapidly, so increasing the thickness of the laminar material layer still improves the cycling performance of the battery.

### Example 3-1

The preparation method for the copper foil with a modification layer is similar to that of Example 4, except that the thickness of the laminar material layer differs, with specific parameters detailed in Table 4. The magnetron sputtering current was 30 mA, and the thickness of the laminar material layer was adjusted by varying the magnetron sputtering time.

**Table 4**

| No. | Active reaction layer | | Laminar material layer | | **H₁/H₂** | h₁/h₀ | First-cycle coulombic efficiency | Number of cycles (cycles) |
|---|---|---|---|---|---|---|---|---|
| | Lithium-affinity material | Thickness H₁ (nm) | Laminar Material | Thickness H₂ (nm) | | | | |
| Example 4 | Sn | 1000 | Bi | 100 | 10 | 214% | 70% | 282 |
| Example 3-1 | Sn | 1000 | Bi | 500 | 2 | 155% | 67% | 296 |

From the test results in Table 4, it can be seen that when the thickness of the active reaction layer remains constant, increasing the thickness of the laminar material layer can better mitigate the expansion issue of the negative electrode. Since Bi may also react with the deposited lithium metal, as the thickness of the laminar material layer increases, the first-cycle coulombic efficiency of the battery decreases to some extent; however, the coulombic efficiency in the later stages of battery cycling increases rapidly, so increasing the thickness of the laminar material layer still improves the cycling performance of the battery.

### Examples 4-1 to 4-5

The preparation method for the copper foil with a modification layer is similar to that of Example 1, except that the type of the active reaction layer or the laminar material layer differs, with specific parameters detailed in Table 5. The type of the active reaction layer or the laminar material layer was adjusted by changing the magnetron sputtering target. The magnetron sputtering current was 30 mA, and the thickness of the active reaction layer or the laminar material layer was adjusted by varying the magnetron sputtering time.

The active reaction layer in Example 1 was an Sn metal layer, and its measured nucleation overpotential for lithium was 9.1 mV.

The active reaction layer in Example 4-1 was a Zn metal layer, and its measured nucleation overpotential for lithium was 26.1 mV.

The active reaction layer in Example 4-2 was an Al metal layer, and its measured nucleation overpotential for lithium was 131.5 mV.

The active reaction layer in Example 4-3 was an Mg metal layer, and its measured nucleation overpotential for lithium was 158.4 mV.

The nucleation overpotential of the active reaction layer was obtained by the following method: Under the same process conditions as in the respective examples, the active reaction layer was directly sputtered onto the copper foil to obtain a negative electrode current collector; in a glove box filled with argon, a metal lithium sheet was used as the counter electrode and assembled with the prepared negative electrode current collector to form a coin cell; at 25°C, the assembled coin cell was left to stand for 12 hours and then discharged at a constant current density of 1 mA/cm² until a capacity of 1 mAh/cm² was reached. At the start of the lithium metal deposition process, a noticeable voltage drop occurred, followed by a flat voltage plateau. The difference (absolute value) between the voltage at the lowest point of the discharge curve and the flat portion of the voltage plateau was taken as the nucleation overpotential of the active reaction layer. The electrolyte salt of the electrolyte solution was LiFSI with a concentration of 1 mol/L, and the solvent of the electrolyte solution was dimethoxyethane (DME). The separator was a PE film with a thickness of 12 µm.

The test results of Examples 4-2 and 4-3 were relatively high because Al and Mg metals were relatively active, and during the transfer from sputtering to the glove box, the metal surfaces of the Al metal layer and the Mg metal layer may be oxidized by air to form metal oxides, resulting in deviations of the nucleation overpotential test results for lithium from their true values.

**Table 5**

| No. | Active reaction layer | | Laminar material layer | | h₁/h₀ | First-cycle coulombic efficiency | Number of cycles (cycles) |
|---|---|---|---|---|---|---|---|
| | Lithium-affinity material | Thickness H₁ (nm) | Laminar material | Thickness H₂ (nm) | | | |
| Example 1 | Sn | 300 | Bi | 30 | 233% | 90% | 236 |
| Example 4-1 | Zn | 300 | Bi | 30 | 289% | 93% | 213 |
| Example 4-2 | Al | 300 | Bi | 30 | 330% | 92% | 203 |
| Example 4-3 | Mg | 300 | Bi | 30 | 322% | 91% | 205 |
| Example 4-4 | Sn | 300 | Sb | 30 | 256% | 91% | 218 |
| Example 4-5 | Sn | 300 | hard carbon | 30 | 243% | 91% | 224 |

From the test results in Table 5, it can be seen that by further selecting an appropriate material for the active reaction layer, the expansion issue of the negative electrode can be better mitigated, and the battery can have good cycling performance and a high first-cycle coulombic efficiency.

From the test results in Table 5, it can be seen that by further selecting an appropriate material for the laminar material layer, the expansion issue of the negative electrode can be better mitigated, and the battery can have good cycling performance and a high first-cycle coulombic efficiency.

It should be noted that the present application is not limited to the above embodiments. The above embodiments are merely examples, and embodiments having substantially the same configuration and achieving the same effects as the technical idea within the scope of the present application are included in the technical scope of the present application. Additionally, without departing from the gist of the present application, various modifications to the embodiments that can be conceived by those skilled in the art and other configurations constructed by combining some constituent elements of the embodiments are also included in the scope of the present application.

## Claims

1. A negative electrode current collector, comprising a negative electrode substrate and a modification layer located on at least one side of the negative electrode substrate, wherein the modification layer comprises an active reaction layer, and a laminar material layer disposed between the active reaction layer and the negative electrode substrate.

2. The negative electrode current collector according to claim 1, wherein a thickness of the active reaction layer is 1 to 25 times that of the laminar material layer.

3. The negative electrode current collector according to claim 2, wherein the thickness of the active reaction layer is 2 to 20 times that of the laminar material layer.

4. The negative electrode current collector according to any one of claims 1 to 3, wherein the thickness of the active reaction layer is 50 nm to 1000 nm; and/or the thickness of the laminar material layer is 5 nm to 500 nm.

5. The negative electrode current collector according to claim 4, wherein the thickness of the active reaction layer is 300 nm to 1000 nm; and/or the thickness of the laminar material layer is 20 nm to 500 nm.

6. The negative electrode current collector according to claim 5, wherein the thickness of the active reaction layer is 300 nm to 750 nm; and/or the thickness of the laminar material layer is 25 nm to 250 nm.

7. The negative electrode current collector according to any one of claims 1 to 6, wherein an areal density of the active reaction layer is greater than or equal to 0.5 g/m²; and/or the areal density of the laminar material layer is greater than or equal to 0.5 g/m².

8. The negative electrode current collector according to any one of claims 1 to 7, wherein the laminar material layer comprises a laminar material, and an electronic conductivity of the laminar material is greater than or equal to 5 S/m.

9. The negative electrode current collector according to any one of claims 1 to 8, wherein the laminar material layer comprises a laminar material, and the laminar material comprises one or more of As, Sb, Bi, black phosphorus, graphite, hard carbon, MXene, MoS₂, MoO₂, TiO₂, RuO₂, or Li₄Ti₅O₁₂.

10. The negative electrode current collector according to claim 9, wherein the laminar material comprises Bi.

11. The negative electrode current collector according to any one of claims 1 to 10, wherein a nucleation overpotential of the active reaction layer is less than or equal to 80 mV.

12. The negative electrode current collector according to any one of claims 1 to 11, wherein the active reaction layer comprises an alkali metal affinity material, the alkali metal affinity material comprising one or more of a graphitized carbon material, a non-metallic material, or a metallic material, wherein the graphitized carbon material comprises one or more of graphene oxide or graphdiyne oxide, the non-metallic material comprises one or more of B or P, and the metallic material comprises one or more of elemental materials or alloy materials of Sn, Zn, Mg, Al, Ag, Au, Ga, In, Ge, Pb, As, Sb, or Bi.

13. The negative electrode current collector according to claim 12, wherein the alkali metal affinity material comprises one or more of elemental materials or alloy materials of Sn, Zn, Mg, or Al.

14. The negative electrode current collector according to any one of claims 1 to 13, wherein:
the negative electrode substrate has a two-dimensional structure or a three-dimensional porous structure; and/or
the negative electrode substrate comprises a metallic material, the metallic material comprising one or more of copper, nickel, titanium, magnesium, aluminum, copper alloy, nickel alloy, titanium alloy, magnesium alloy, or aluminum alloy.

15. A battery cell, comprising the negative electrode current collector according to any one of claims 1 to 14.

16. The battery cell according to claim 15, wherein the battery cell comprises at least one of a lithium metal battery cell, a sodium metal battery cell, a negative electrode-free lithium metal battery cell, or a negative electrode-free sodium metal battery cell.

17. A battery, comprising the battery cell according to claim 15 or 16.

18. An electric apparatus, comprising the battery according to claim 17, wherein the battery is used to supply electrical energy.
